(19) Europäisches Patentamt
European Patent Office
Office européen des brevets

(11) **EP 1 301 366 B1**

(12) **EUROPÄISCHE PATENTSCHRIFT**

(45) Veröffentlichungstag und Bekanntmachung des Hinweises auf die Patenterteilung:
**24.09.2008 Patentblatt 2008/39**

(21) Anmeldenummer: **01953131.8**

(22) Anmeldetag: **03.07.2001**

(51) Int Cl.:
*B60W 10/10* (2006.01)          *B60W 20/00* (2006.01)
*F16H 61/21* (2006.01)          *B60W 10/08* (2006.01)
*B60W 10/18* (2006.01)          *B60W 10/26* (2006.01)
*B60K 6/48* (2007.10)          *B60K 6/547* (2007.10)

(86) Internationale Anmeldenummer:
**PCT/DE2001/002447**

(87) Internationale Veröffentlichungsnummer:
**WO 2002/006072 (24.01.2002 Gazette 2002/04)**

(54) **STEUEREINHEIT FÜR EIN GETRIEBE UND ZUGEHÖRIGES BETRIEBSVERFAHREN**

CONTROL UNIT FOR A TRANSMISSION AND CORRESPONDING OPERATING METHOD

UNITE DE COMMANDE POUR TRANSMISSION ET PROCEDE PERMETTANT SA MISE EN FONCTIONNEMENT

(84) Benannte Vertragsstaaten:
**DE FR GB**

(30) Priorität: **18.07.2000 DE 10034872**

(43) Veröffentlichungstag der Anmeldung:
**16.04.2003 Patentblatt 2003/16**

(73) Patentinhaber: **Continental Automotive GmbH**
**30165 Hannover (DE)**

(72) Erfinder:
• **GRASSL, Georg**
**93138 Hainsacker (DE)**
• **RAMPELTSHAMMER, Martin**
**81369 München (DE)**

• **PROBST, Gregor**
**84028 Landshut (DE)**
• **GUTKNECHT-STÖHR, Florian**
**93047 Regensburg (DE)**

(56) Entgegenhaltungen:
**EP-A- 0 800 949          EP-A- 0 933 245**
**DE-A- 10 047 933          US-A- 5 318 142**

• **PATENT ABSTRACTS OF JAPAN vol. 018, no. 292 (M-1615), 3. Juni 1994 (1994-06-03) & JP 06 055941 A (AQUEOUS RES:KK;OTHERS: 01), 1. März 1994 (1994-03-01)**
• **PATENT ABSTRACTS OF JAPAN vol. 1997, no. 09, 30. September 1997 (1997-09-30) & JP 09 135502 A (NISSAN MOTOR CO LTD), 20. Mai 1997 (1997-05-20)**

**Beschreibung**

Die Erfindung betrifft eine Steuereinheit zur Einstellung des Übersetzungsverhältnisses eines zusammen mit einem Motor in einem Antriebsstrang angeordneten Getriebes gemäß dem Oberbegriff des Anspruchs 1 sowie ein Verfahren zum Betrieb einer derartigen Steuereinheit gemäß Anspruch 9.

Es ist beispielsweise aus der deutschen Offenlegungsschrift DE 42 30 101 A1 bekannt, bei einem Kraftfahrzeug ein vorgegebenes Bremsmoment zum einen durch das Bremsmoment einer Betriebsbremse und zum anderen durch das Bremsmoment (Schleppmoment) des Motors zu erzeugen, wodurch die Betriebsbremse entlastet wird, was insbesondere bei langandauernden Bremsvorgängen vorteilhaft ist, da ansonsten die Gefahr besteht, dass die Betriebsbremse überhitzt wird und dadurch ihre optimale Bremswirkung verliert.

Aus der deutschen Offenlegungsschrift DE 43 30 391 A1 ist weiterhin eine Steuereinheit für einen Antriebsstrang eines Kraftfahrzeugs bekannt, bei der aus der Betätigung des Bremspedals eine gewünschte Bremswirkung bestimmt wird, die wiederum zu einem Rückschalten des automatischen Getriebes führt, um die Bremswirkung des Motors zu erhöhen. Hierbei wird die Tatsache ausgenutzt, dass die Bremswirkung des Motors mit zunehmender Drehzahl steigt, so dass die Bremswirkung bei einer vorgegebenen Geschwindigkeit in einem kleinen Gang größer ist als in einem größeren Gang.

Nachteilig an den vorstehend beschriebenen bekannten Anordnungen ist jedoch die Tatsache, dass das Bremsmoment des Motors mit der Drehzahl zunimmt, so dass zur Erreichung einer guten Bremswirkung des Motors relativ hohe Drehzahlen-erforderlich sind, was im Hinblick auf Lärm, Verschließ und Komfort störend ist.

Aus der Druckschrift EP 0 800 949 A23 ist eine gattungsbildende Steuereinheit für ein mit einem Motor und einem elektrischen Generator in einem Antriebsstrang angeordnetes Getriebe bekannt, wobei der Generator eine Batterie speist. Im Falle einer Bremsanforderung wird abhängig vom Ladezustand der Batterie entweder ein Betriebsmodus "Regeneratives Bremsen" oder ein Betriesmodus "Motorbremsen" ausgewählt.

Der Erfindung liegt also die Aufgabe zugrunde, eine Anordnung zu schaffen, die neben der Betriebsbremse und dem Motorbremsmoment ein zusätzliches Bremsmoment auch bei relativ geringen Drehzahlen erzeugt. Weiterhin liegt der Erfindung die Aufgabe zugrunde, ein Betriebsverfahren für eine derartige Anordnung anzugeben.

Die Erfindung wird, ausgehend von der bekannten Steuereinheit gemäß dem Oberbegriff des Anspruchs 1, durch die kennzeichnenden Merkmale des Anspruchs 1 bzw. - hinsichtlich des Betriebsverfahrens - durch die Merkmale des Anspruchs 9 gelöst.

Die Erfindung umfaßt die allgemeine technische Lehre, das von einem in dem Antriebsstrang angeordneten elektrischen Generator erzeugte Bremsmoment auszunutzen, wobei vorteilhaft ist, dass das Bremsmoment eines elektrischen Generators bei gegebener elektrischer Leistung bei geringen Drehzahlen maximal ist. Im übrigen ist auch der Wirkungsgrad des Generators unter diesen Bedingungen besser.

Bei dem elektrischen Generator handelt es sich vorzugsweise um einen integrierten Starter-Generator (ISG), der im Fahrbetrieb das elektrische Bordnetz des Kraftfahrzeugs mit Strom versorgt und bei stillstehendem Motor zum Anlassen des Motors verwendet werden kann. Der Begriff Generator ist jedoch hierbei und im folgenden allgemein zu verstehen und kann alle Ag gregate umfassen, die mit dem Antriebsstrang gekoppelt sind und aus dem rotierenden Antriebsstrang ein Bremsmoment erzeugen können.

Bei der Ausnutzung der Bremswirkung eines elektrischen Generators zur Entlastung der Betriebsbremse ist zu beachten, dass das von dem Generator erzeugte Bremsmoment nicht nur in der vorstehend beschriebenen Weise von der Drehzahl, sondern auch von der elektrischen Spannung bzw. dem Ladezustand der von dem Generator gespeisten Batterie abhängt. Einerseits ist das von dem Generator erzeugte Bremsmoment bei niedriger Batteriespannung geringer als bei Nennspannung, was insbesondere bei geringen Drehzahlen zwischen 1000 und 3000 Umdrehungen pro Minute auffällt. Andererseits kann der Generator bei einer vollständig geladenen Batterie keine weitere Energie in die Batterie zurückladen, so dass der Generator in diesem Zustand der Batterie nicht generatorisch betrieben werden darf.

Das zur Entlastung der Betriebsbremse erzeugte Bremsmoment setzt sich also zum einen aus dem Bremsmoment des Motors und zum anderen aus dem Bremsmoment des Generators zusammen, wobei auch die Summe dieser beiden Bremsmomente eine Drehzahlabhängigkeit aufweist und mit zunehmender Drehzahl zunächst abfällt, so dass zum Erreichen einer guten Bremswirkung geringe Drehzahlen angestrebt werden müssen, solange die Batterie nicht vollständig aufgeladen ist und der Generator demzufolge zur Bremswirkung beitragen kann. Falls die Batterie dagegen vollständig aufgeladen ist, so darf der Generator nicht generatorisch betrieben werden und kann demzufolge auch nicht zur Bremswirkung beitragen, so dass das die Betriebsbremse entlastende Bremsmoment ausschließlich von dem Motor erzeugt wird. In diesem Fall sind zum Erreichen einer guten Bremswirkung dagegen höhere Drehzahlen anzustreben, da das von dem Motor erzeugte Bremsmoment allein betrachtet mit der Drehzahl zunimmt.

Die erfindungsgemäße Steuereinheit erfaßt deshalb mittels einer Meßeinheit den Ladezustand der Batterie und stellt das Übersetzungsverhältnis eines in dem Antriebsstrang angeordneten Getriebes in Abhängigkeit von dem Ladezustand der Batterie so ein, daß eine möglichst gute rekuperativ nutzbare Bremswirkung erzielt wird.

Dies bedeutet, dass bei einem automatischen Getriebe die Rückschaltpunkte bei kleineren Drehzahlen liegen, um die Drehzahl möglichst lange in einem niedrigen Bereich zu halten, in dem der Generator eine gute Bremswirkung aufweist.

In einer Variante der Erfindung ist der Generator ausgangsseitig über ein steuerbares Schaltelement mit der Batterie verbunden, um den Generator bei vollständig geladener Batterie von der Batterie zu trennen. Dies ist vorteilhaft zum Schutz der Batterie, da der Generator bei vollständig geladener Batterie keine elektrische Energie in die Batterie einspeisen kann und deshalb nicht generatorisch betrieben werden darf. Der Begriff Schaltelement ist hierbei allgemein zu verstehen und umfaßt beispielsweise diskret aufgebaute Schaltelemente wie Relais oder Leistungshalbleiter.

In einer weiterbildenden Variante der Erfindung verbindet das Schaltelement den Generator wahlweise mit der Batterie oder mit einer Lastwiderstandsanordnung (z.B. elektrische Zusatzheizung, Heckscheibenheizung), um auch bei vollständig geladener Batterie einen generatorischen Betrieb des Generators zu ermöglichen.

Gemäß einer Variante der Erfindung ist in dem Antriebsstrang zwischen dem Generator und dem Motor eine weitere Kupplung angeordnet, die es ermöglicht, die Drehzahl des Generators beispielsweise unter die Leerlaufdrehzahl des Motors zu senken, wodurch das Bremsmoment des Generators maximiert werden kann.

In einer Variante der Erfindung ist darüber hinaus vorgesehen, den Motor während eines Bremsvorgangs abzuschalten, um Kraftstoff zu sparen und Emissionen zu vermeiden. Dadurch wird allerdings nach Beendigung des Bremsvorgangs ein Schnellstart des Motors erforderlich. Der Generator ist deshalb in einer Variante der Erfindung ausgangsseitig vorzugsweise mit hochdynamischen elektrischen Energiespeichern (z.B. Supercaps) verbunden, aus denen nach Beendigung des Bremsvorgangs die elektrische Energie zum Schnellstart des Motors entnommen werden kann.

Andere vorteilhafte Varianten der Erfindung sind in den Unteransprüchen beschrieben oder werden in Verbindung mit der folgenden Beschreibung des bevorzugten Ausführungsbeispiels der Erfindung anhand der Zeichnungen erläutert. Es zeigen:

Figur 1     den Antriebsstrang eines Kraftfahrzeugs sowie Hilfssysteme und die erfindungsgemäße Steuereinheit,

Figur 2     die erfindungsgemäße Steuereinheit als Blockschaltbild,

Figur 3     die in der erfindungsgemäßen Steuereinheit enthaltene Berechnungseinheit zur Berechnung der Rückschaltpunkte des automatischen Getriebes,

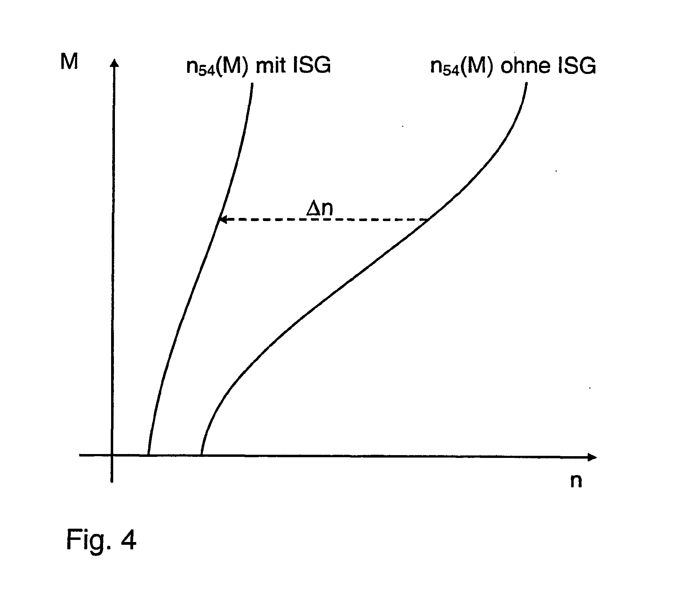

Figur 4     die Rückschaltdrehzahl als Funktion des gewünschten Bremsmoments sowie

Figur 5     ein Flussdiagramm des erfindungsgemäßen Betriebsverfahrens.

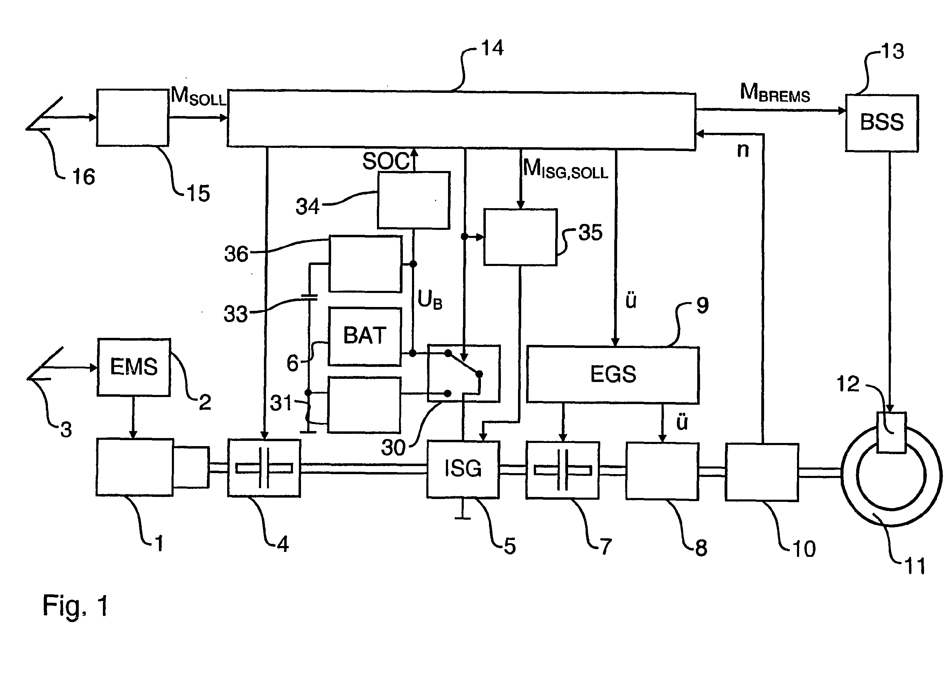

Die in Figur 1 dargestellte Anordnung zeigt einen Antriebsstrang eines Kraftfahrzeuges, der von einer Brennkraftmaschine 1 angetrieben wird, wobei die Brennkraftmaschine 1 herkömmlich aufgebaut ist und deshalb nur schematisch dargestellt wird.

Die Brennkraftmaschine 1 wird von einer elektronischen Motorsteuerung (EMS) 2 angesteuert, die als Eingangssignal unter anderem die Stellung eines Fahrpedals 3 erhält.

Ausgangsseitig ist die Brennkraftmaschine 1 über eine Welle mit einer Kupplung 4 verbunden, die es ermöglicht, die Brennkraftmaschine 1 von dem Antriebsstrang abzutrennen. Dies ermöglicht eine Entkopplung der Drehzahl eines in dem Antriebsstrang angeordneten integrierten Starter-Generators (ISG) 5, wodurch die Bremswirkung des Starter-Generators (ISG) 5 verbessert wird.

Im geschlossenen Zustand verbindet die Kupplung 4 jedoch die Brennkraftmaschine 1 mit dem integrierten Starter-Generator (ISG) 5, der im Fahrbetrieb als Generator arbeitet und eine elektrische Batterie 6 auflädt. Bei stillstehendem Motor kann der integrierte Starter-Generator 5 dagegen zum Anlassen der Brennkraftmaschine 1 verwendet werden.

Weiterhin ist in dem Antriebsstrang eine Kupplung 7 für einen Drehmomentwandler 8 angeordnet, wobei die Kupplung 7 beispielsweise als Naß- oder Trockenkupplung ausgeführt sein kann. Die Kupplung 7 und der Drehmomentwandler 8 werden von einer elektronischen Getriebesteuerung (EGS) 9 angesteuert, wobei die elektronische Getriebesteuerung 9 fünf verschiedene Übersetzungsverhältnisse ü des Drehmomentwandlers 8 einstellen kann. Die Umschaltung zwischen den einzelnen Gängen entsprechend den verschiedenen Übersetzungsverhältnissen erfolgt hierbei durch die elektronische Getriebesteuerung (EGS) 9 automatisch durch eine entsprechende Ansteuerung der Kupplung 7 und des Drehmomentwandlers 8. Alternativ zu dem dargestellten Getriebe mit festen Gangstufen kann auch ein Getriebe mit kontinuierlich einstellbarem Übersetzungsverhältnis verwendet werden.

Ferner ist in dem Antriebsstrang ein Drehzahlsensor 10 angeordnet, der laufend die aktuelle Drehzahl n des Antriebsstrangs misst und zu Zwecken der Signalverarbeitung bereitstellt, wie noch detailliert beschrieben wird.

Schließlich ist der Antriebsstrang mit einem Rad 11 des Kraftfahrzeugs verbunden, wobei an dem Rad 11 ein Bremsaktuator 12 angeordnet ist, der eine Abbremsung des Rads 11 ermöglicht. Der Bremsaktuator 12 kann hierbei beispielsweise Bestandteil einer Kolbenbremse oder einer Scheibenbremse sein und wird von einem Bremssteuersystem (BSS) 13 angesteuert, wobei das Bremssteuersystem (BSS) 13 das gewünschte Bremsmoment $M_{Brems}$ der Betriebsbremse von einer Steuereinheit 14 erhält. Das Bremssystem kann im Rahmen der Erfindung wahlweise als herkömmliches hydraulisches Bremssystem oder als elektronisches Bremssystem ("Brage by Wire") ausgeführt sein.

Das gewünschte Gesamt-Bremsmoment $M_{soll}$ wird von einer Auswertungseinheit 15 in Abhängigkeit von der Betätigung eines Bremspedals 16 ermittelt, wobei beispielsweise die Pedalstellung, die Pedalkraft, die Dauer der Pedalbetätigung und die Geschwindigkeit der Pedalbetätigung berücksichtigt wird. Das gewünschte Bremsmoment $M_{soll}$ setzt sich hierbei nach folgender Formel aus dem Bremsmoment $M_V$ der Brennkraftmaschine, dem Bremsmoment $M_{ISG}$ des integrierten Starter-Generators (ISG) 5, dem Bremsmoment $M_{Brems}$ der Betriebsbremse und dem Übersetzungsverhältnis ü zusammen:

$$M_{Soll} = M_{Brems} + M_{ISG} \cdot \ddot{u} + M_V \cdot \ddot{u}$$

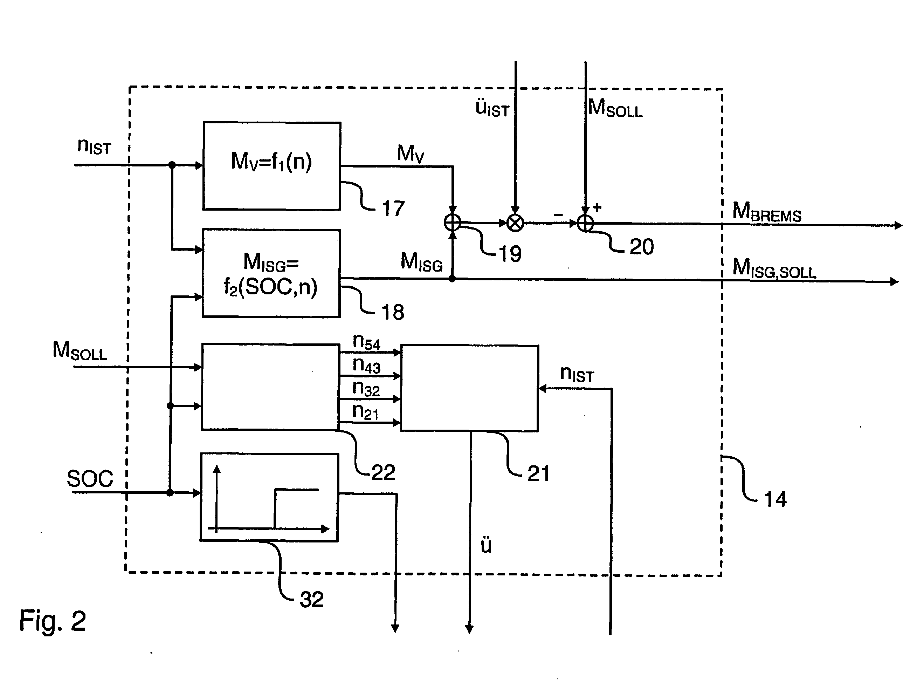

Die Steuereinheit 14 berechnet deshalb zunächst das Bremsmoment $M_V$ der Brennkraftmaschine 1 und das maximal mögliche Bremsmoment $M_{ISG}$ des integrierten Starter-Generators (ISG) 5, um den Bremsaktuator 12 zur Erzeugung des restlichen Bremsmoments $M_{Brems}$ anzusteuern, wie in der Detaildarstellung der Steuereinheit 14 in Figur 2 dargestellt ist.

Hierzu weist die Steuereinheit 14 ein Kennlinienglied 17 auf, das eingangsseitig die aktuelle Drehzahl $n_{Ist}$ von dem Drehzahlsensor 10 aufnimmt und daraus entsprechend einem vorgegebenen funktionalen Zusammenhang $M_V=f_1(n_{IST})$ das Bremsmoment $M_V$ der Brennkraftmaschine 1 berechnet.

Darüber hinaus weist die Steuereinheit.14 ein zweites Kennlinienglied 18 auf, das eingangsseitig zum einen mit dem Drehzahlsensor 10 und zum anderen mit einer Berechnungseinheit 34 verbunden ist, wobei die Berechnungseinheit 34 eingangsseitig mit der Batterie 6 verbunden ist und aus der Batteriespannung $U_B$ den Ladezustand SOC der Batterie 6 ermittelt. Das Kennlinienglied 18 bestimmt aus einem vorgegebenen Kennlinienfeld $M_{ISG}=f_2(SOC,n_{IST})$ in Abhängigkeit von dem Ladezustand SOC der Batterie und der Drehzahl $n_{IST}$ das Bremsmoment des integrierten Starter-Generators (ISG) 5 berechnet. Die auf diese Weise ermittelten Bremsmomente $M_V$ und $M_{ISG}$ werden einem Addierer 19 zugeführt, der das eine Entlastung der Betriebsbremse ermöglichende Bremsmoment berechnet und ausgangsseitig mit einem Subtrahierer 20 verbunden ist, der aus dem vorgegebenen Gesamt-Bremsmoment $M_{soll}$ und der Summe aus den Bremsmomenten des integrierten Starter-Generators (ISG) 5 und der Brennkraftmaschine 1 unter Berücksichtigung der Getriebeübersetzung ü das erforderliche Bremsmoment $M_{Brems}$ der Betriebsbremse berechnet und an das Bremssteuersystem (BSS) 13 weiterleitet.

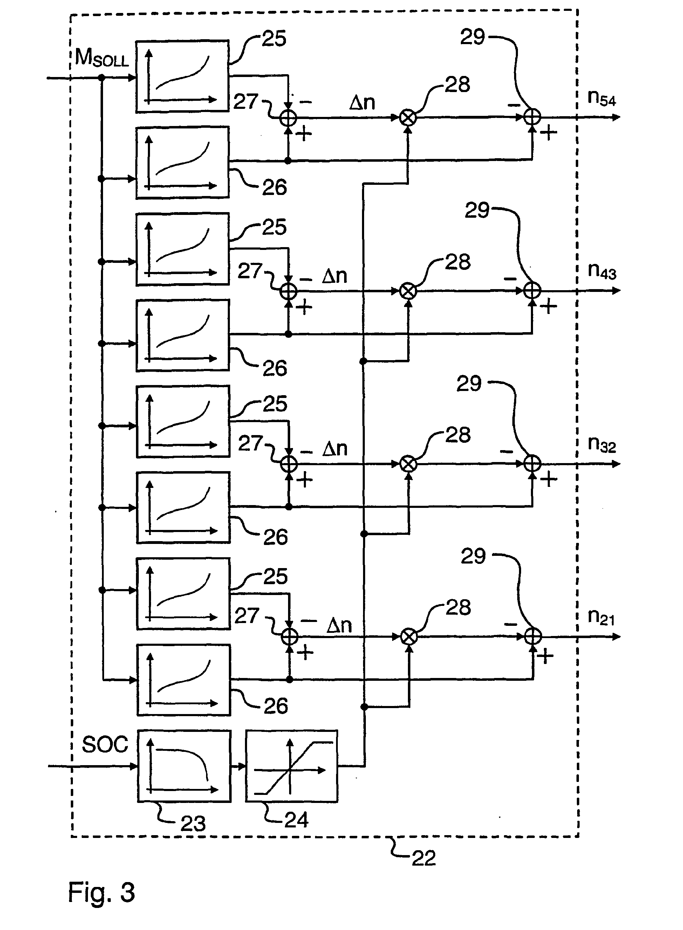

Darüber hinaus weist die Steuereinheit 14 eine Vergleichereinheit 21 auf, die eingangsseitig mit dem Drehzahlsensor 10 verbunden ist und die aktuelle Drehzahl $n_{IST}$ laufend mit vorgegebenen Rückschaltdrehzahlen $n_{54}$, $n_{43}$, $n_{32}$, $n_{21}$ vergleicht, um die elektronische Getriebesteuerung (EGS) 9 beim Erreichen einer Rückschaltdrehzahl so anzusteuern, dass der Drehmomentwandler 8 einen Gang zurückschaltet. Sinkt die aktuelle Drehzahl $n_{Ist}$ während eines Bremsvorgangs beispielsweise bis auf die Rückschaltdrehzahl $n_{54}$, so schaltet der Drehmomentwandler 8 vom fünften in den vierten Gang zurück. Die Berechnung der Rückschaltdrehzahlen erfolgt hierbei in Abhängigkeit von dem Ladezustand der Batterie 6 dynamisch durch eine Berechnungseinheit 22, die detailliert in Figur 3 dargestellt ist.

Zur Erfassung des Ladezustandes der Batterie 6 weist die Berechnungseinheit 22 zunächst ein Kennlinienglied 23 auf, das eingangsseitig mit der Ladezustandsberechnungseinheit 34 verbunden ist, die ausgangsseitig ein den Ladezustand der Batterie 6 wiedergebendes Signal SOC erzeugt. Am Ausgang des Kennlinienglieds 23 erscheint dann ein multiplikativer Faktor, der nachfolgend in einem Begrenzer 23 auf einen Maximalwert begrenzt wird.

Zur Berechnung der vier Rückschaltdrehzahlen $n_{54}$, $n_{43}$, $n_{32}$, $n_{21}$ weist die Berechnungseinheit 22 vier im wesentlichen übereinstimmende Baugruppen auf, so dass in Figur 3 für übereinstimmende Bauelemente jeweils dieselben Bezugzeichen verwendet werden und im folgenden lediglich eine der übereinstimmenden Baugruppen beschrieben wird.

So weist jede der übereinstimmenden Baugruppen zwei Kennlinienglieder 25, 26 auf, die eingangsseitig das gewünschte Gesamt-Bremsmoment $M_{soll}$ aufnehmen und daraus die jeweilige Schaltdrehzahl $n_{i,i-1}$ unabhängig von dem aktuellen Ladezustand der Batterie 6 bestimmen. Die in den Kennliniengliedern 25, 26 gespeicherten Kennlinien sind exemplarisch in Figur 6 dargestellt, wobei die rechte Kennlinie in Figur 6 die Schaltdrehzahl ohne Mitwirkung des integrierten Starter-Generators (ISG) 5 wiedergibt (d.h. bei SOC=max.), wohingegen die linke Kennlinie die Schaltdrehzahl bei optimaler Mitwirkung des integrierten Starter-Generators (ISG) darstellt (d.h. bei SOC=min.). Die tatsächliche Schaltdrehzahl liegt hierbei in Abhängigkeit von dem aktuellen Ladezustand der Batterie 6 zwischen den beiden in Figur 6 dargestellten Kennlinien. Die von den beiden Kennliniengliedern 25 und 26 berechnete Schaltdrehzahlen stellen also Extremwerte dar und begrenzen die Bandbreite, innerhalb derer die Schaltdrehzahl tatsächlich liegt. Die Kennlinienglieder 25, 26 sind deshalb ausgangsseitig mit einem Subtrahierer 27 verbunden, der die Bandbreite $\Delta n$ berechnet, innerhalb derer die Schaltdrehzahl liegt. Das Ausgangssignal des Subtrahierers 27 wird einem Multiplizierer 28 zugeführt, der die Bandbreite $\Delta n$ mit dem von dem Ladezustand der Batterie 6 abhängigen Signal multipliziert. Das auf diese Weise erzeugte Produkt wird wiederum einem Subtrahierer 29 zugeführt, der eingangsseitig mit dem Kennlinienglied 26 verbunden ist und deshalb die Schaltdrehzahl aufnimmt, die sich aus dem vorgegebenen Bremsmoment $M_{Soll}$ ohne Berücksichtigung der Bremswirkung des integrierten Starter-Generators (ISG) 5 ergibt. Von dieser "statischen" Schaltdrehzahl wird dann das Ausgangssignal des Multiplizierers 28 subtrahiert, so dass die tatsächlichen Schaltdrehzahlen gegenüber den "statischen" Schaltdrehzahlen ohne eine Berücksichtigung des integrierten Starter-Generators (ISG) 5 verringert sind. Ist die Batterie 6 beispielsweise vollständig entladen, so nimmt das Ausgangssignal des Begrenzers 24 den Wert 1 an. Entsprechend leitet der Multiplizierer 28 die Drehzahlbandbreite Δn vollständig an den Subtrahierer 29 weiter, so dass sich die Schaltdrehzahl aus der in Figur 6 links gezeigten Kennlinie ergibt. Ist die Batterie 6 dagegen vollständig geladen, so nimmt das Ausgangssignal des Begrenzers 24 den Wert Null an, so dass sich die am Ausgang des Subtrahierers 29 erscheinende Schaltdrehzahl aus der in Figur 6 rechts dargestellten Kennlinie ergibt.

Darüber hinaus weist die in Figur 1 dargestellte Anordnung ein steuerbares Schaltelement 30 auf, das den integrierten Starter-Generator (ISG) 5 wahlweise mit der Batterie 6 oder mit einer Lastwiderstandsanordnung 31 verbindet. Dies ermöglicht einen generatorischen Betrieb des integrierten Starter-Generators (ISG) 5 auch dann, wenn die Batterie 6 bereits vollständig geladen ist und deshalb keine elektrische Energie mehr aufnehmen kann. Die Ansteuerung des Schaltelementes 30 erfolgt hierbei durch eine in der Steuereinheit 14 angeordnete Auswertungseinheit 32, die eingangsseitig den Ladezustand SOC der Batterie 6 erfaßt und den integrierten Starter-Generator (ISG) 5 beim Überschreiten eines vorgegebenen Maximalwerts der Batterieladung SOC durch das Schaltelement 30 von der Batterie 6 trennt und auf die Lastwiderstandsanordnung 31 schaltet.

Für ein lastfreies Schalten besteht die Möglichkeit, das Moment $M_{ISG,SOLL}$ kurzzeitig zu reduzieren. Hierzu ist ein Schaltelement 35 vorgesehen, daß wie das Schaltelement 30 von der Steuereinheit 14 angesteuert wird. In Abhängigkeit von der Ansteuerung gibt das Schaltelement 35 entweder den von der Steuereinheit berechneten Sollwert $M_{ISG,SOLL}$ oder den Wert Null als Sollwert an den Generator 5.

Schließlich ist der integrierte Starter-Generator 5 über ein weiteres Schaltelement 36 das Schaltelement 30 mit einem hochdynamischen Energiespeicher in Form eines Supercaps 33 verbunden, der im Generatorbetrieb elektrische Energie aufnimmt und nach der während eines Bremsvorgangs erfolgenden Abschaltung der Brennkraftmaschine 1 ein schnelles Starten der Brennkraftmaschine 1 ermöglicht.

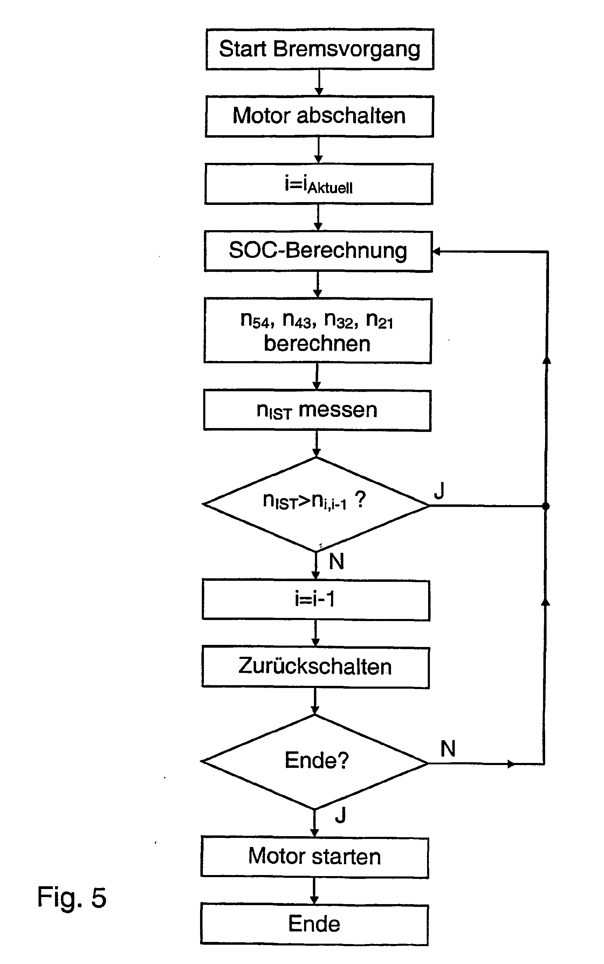

Im folgenden wird nun anhand des in Figur 5 dargestellten Flussdiagramms das erfindungsgemäße Betriebsverfahren für die vorstehend beschriebene Steuereinheit erläutert, wobei zur Vereinfachung davon ausgegangen wird, dass der Drehmomentwandler 8 zu Beginn des Bremsvorgangs in der höchsten Gangstufe betrieben wird. Zu Beginn des Bremsvorgangs wird der Motor zunächst abgeschaltet. Anschließend wird dann die Batteriespannung gemessen, um die interpolierten Rückschaltdrehzahlen $n_{54}$, $n_{43}$, $n_{32}$, $n_{21}$ in Abhängigkeit von dem Ladezustand SOC der Batterie 6 und dem vorgegebenen Bremsmoment $M_{soll}$ zu berechnen, wie in Figur 3 dargestellt ist. Anschließend wird dann von dem Drehzahlsensor 10 die aktuelle Drehzahl $n_{Ist}$ gemessen und mit den zuvor berechneten Schaltdrehzahlen $n_{54}$, $n_{43}$, $n_{32}$, $n_{21}$ verglichen.

Solange die vorgegebenen Schaltdrehzahlen während des Bremsvorgangs nicht unterschritten werden, werden die Schaltdrehzahlen erneut dynamisch berechnet und mit der aktuellen Drehzahl $n_{Ist}$ verglichen.

Beim Erreichen einer der vorgegebenen Schaltdrehzahlen schaltet der Drehmomentwandler 8 dann einen Gang herunter, woraufhin die Schaltdrehzahlen erneut dynamisch berechnet werden.

Am Ende des Bremsvorgangs wird der Motor dann ggf. gestartet, wozu die in dem hochdynamischen Energiespeicher 33 gespeicherte Energie verwendet wird.

Die Erfindung ist nicht auf die vorstehend beschriebenen Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

**Patentansprüche**

**1.** Steuereinheit (14) zur Einstellung des Übersetzungsverhältnisses eines zusammen mit einem Motor (1) und einem elektrischen Generator (5) in einem Antriebsstrang angeordneten Getriebes (8), um eine Bremsunterstützung durch das Bremsmoment des Motors (1) und das Bremsmoment des elektrischen Generators (5) zu bewirken, wobei der elektrische Generator (6) eine Batterie (6) speist, mit

mehreren Signaleingängen zur Aufnahme des gewünschten Bremsmoments ($M_{SOLL}$) sowie der Drehzahl ($n_{IST}$) des Motors (1) und/oder der Fahrzeuggeschwindigkeit,

einer Vergleichseinheit (21) zum Vergleichen der Drehzahl ($n_{IST}$) des Motors (1) und/oder der Fahrzeuggeschwindigkeit mit Schaltpunkten ($n_{54}$, $n_{43}$, $n_{32}$, $n_{21}$) des Getriebes (8), wobei jeder Schaltpunkt einer Drehzahl des Motors (1) oder einer Fahrzeuggeschwindigkeit entspricht, und zur Bestimmung des zur Erreichung des gewünschten Bremsmoments geeigneten Obersetzungsverhältnisses des Getriebes (8), sowie

einem Signalausgang zur Ausgabe eines das Obersetzungsverhältnis des Getriebes (8) bestimmenden Steuersignals (ü),

**gekennzeichnet durch**
eine Berechnungseinheit (22) zum Bestimmen der Schaltpunkte ($n_{54}$, $n_{43}$, $n_{32}$, $n_{21}$) des Getriebes (8) in Abhängigkeit von dem Ladezustand (SOC) der Batterie.

2.  Steuereinheit (14) nach Anspruch 1,
    **dadurch gekennzeichnet,**
    **dass** der Generator (5) ausgangsseitig über ein steuerbares Schaltelement mit der Batterie (6) verbunden ist, um den Generator (5) bei vollständig geladener Batterie (6) von der Batterie (6) zu trennen.

3.  Steuereinheit (14) nach Anspruch 2,
    **dadurch gekennzeichnet,**
    **dass** das Schaltelement ausgangsseitig zum einen mit der Batterie (6) und zum anderen mit einer Lastwiderstandsanordnung verbunden ist, um den Generator (5) bei vollständig geladener Batterie (6) auf die Lastwiderstandsanordnung zu schalten.

4.  Steuereinheit (14) nach mindestens einem der vorhergehenden Ansprüche,
    **dadurch gekennzeichnet,**
    **dass** das an dem Signalausgang ausgegebene Übersetzungsverhältnis des Getriebes bei teilentladener Batterie (6) kleiner oder gleich dem an dem Signalausgang ausgegebenen Übersetzungsverhältnis des Getriebes bei vollständig geladener Batterie (6) ist.

5.  Steuereinheit (14) nach Anspruch 4,
    **dadurch gekennzeichnet,**
    **dass** das Getriebe (8) mehrere feste Übersetzungsstufen aufweist, wobei die Umschaltung zwischen den Ubersetzungsstufen jeweils bei vorgegebenen Schaltwerten ($n_{54}$, $n_{43}$, $n_{32}$, $n_{21}$) der Fahrzeuggeschwindigkeit oder der Drehzahl ($n_{IST}$) erfolgt, wobei die Schaltwerte bei teilentladener Batterie (6) kleiner sind als die entsprechenden Schaltwerte bei vollständig geladener Batterie (6).

6.  Steuereinheit (14) nach einem der vorhergehenden Ansprüche
    **dadurch gekennzeichnet,**
    **dass** in dem Antriebsstrang zwischen dem Generator (5) und dem Motor (1) eine Kupplung (4) angeordnet ist.

7.  Steuereinheit (14) nach mindestens einem der vorhergehenden Ansprüche,
    **dadurch gekennzeichnet,**
    **dass** der Generator (5) ausgangsseitig mit einem hochdynamischen elektrischen Energiespeicher (33) verbunden ist.

8.  Steuereinheit (14) nach Anspruch 7,
    **dadurch gekennzeichnet,**
    **dass** der hochdynamische Energiespeicher (33) ein Supercap ist.

9.  Verfahren zum Betrieb einer Steuereinheit (14) nach einem der vorhergehenden Ansprüche, mit den folgenden Schritten:

    - Bestimmung des Ladezustands der Batterie (6),
    - Bestimmung von Schaltpunkten ($n_{54}$, $n_{43}$, $n_{32}$, $n_{21}$) des Getriebes (8) in Abhängigkeit von dem Ladungszustand der Batterie (6), wobei jeder Schaltpunkt einer Drehzahl des Motors (1) oder einer Fahrzeuggeschwindigkeit entspricht,
    - Messung der Drehzahl ($n_{IST}$) des Motors oder der Fahrzeuggeschwindigkeit,
    - Herunterschalten des Getriebes (8) beim Erreichen der Schaltpunkte ($n_{54}$, $n_{43}$, $n_{32}$, $n_{21}$).

10. Verfahren nach Anspruch 9,
    **dadurch gekennzeichnet,**
    **dass** der Generator (5) von der Batterie (6) getrennt wird, wenn die Batterie (6) vollständig geladen ist.

11. Verfahren nach Anspruch 10,
    **dadurch gekennzeichnet,**
    **dass** der Generator (5) mit einer Lastwiderstandsanordnung (31) verbunden wird, wenn die Batterie (6) vollständig geladen ist.

**12.** Verfahren nach mindestens einem der Ansprüche 9 bis 11, mit den folgenden Schritten:

- Berechnung des Bremsmoments ($M_v$) des Motors (1) aus der Drehzahl ($n_{IST}$) des Motors (1) ,
- Berechnung des Bremsmoments ($M_{ISG}$) des Generators (5) aus dem Ladezustand der Batterie (6) und der Drehzahl ($n_{IST}$) des Generators (5),
- Berechnung des erforderlichen Bremsmoments ($M_{BREMS}$) der Betriebsbremse (12) aus dem vorgegebenen gesamten Bremsmoment ($M_{SOLL}$) und den Bremsmomenten des Generators (5) und des Motors (1),
- Ansteuerung der Betriebsbremse (12) mit dem berechneten Bremsmoment ($M_{BREMS}$)**.**

**13.** Verfahren nach mindestens einem der Ansprüche 9 bis 12,
**dadurch gekennzeichnet,**
**dass** der Motor (1) während eines Bremsvorgangs abgeschaltet wird.

**14.** Verfahren nach Anspruch 13,
**dadurch gekennzeichnet,**
**dass** der Generator (5) während des Bremsvorgangs mit einem hochdynamischen elektrischen Energiespeicher (33) verbunden wird und diesen auflädt.

**Claims**

**1.** Control unit (14) for setting the transmission ratio of a transmission (8) which is arranged in a drive train together with an engine (1) and an electric generator (5), in order to obtain braking assistance through the braking torque of the engine (1), and to bring about the braking torque of the electrical generator (5), the electrical generator (6) feeding a battery (6), having
a plurality of signal inputs for receiving the desired braking torque ($M_{SET}$) and the rotational speed ($n_{ACT}$) of the engine (1) and/or of the speed of the vehicle,
a comparator unit (21) for comparing the rotational speed ($n_{ACT}$) of the engine (1) and/or the vehicle speed with switching points ($n_{54}$, $n_{43}$, $n_{32}$, $n_{21}$) of the transmission (8), each switching point corresponding to a rotational speed of the engine (1) or to a vehicle speed, and for determining the transmission ratio of the transmission (8) suitable for achieving the desired brake torque, and
a signal output for outputting a control signal (t) which determines the transmission ratio of the transmission (8),
**characterized by** a calculation unit (22) for determining the switching points ($n_{54}$, $n_{43}$, $n_{32}$, $n_{21}$) of the transmission (8) as a function of the charge status (SOC) of the battery.

**2.** Control unit (14) according to Claim 1, **characterized in that** the generator (5) is connected at the output end to the battery (6) via a controllable switching element in order to disconnect the generator (5) from the battery (6) when the battery (6) is completely charged.

**3.** Control unit (14) according to Claim 2, **characterized in that** the switching element is connected at the output end to the battery (6) on the one hand, and to a load resistance arrangement on the other, in order to connect the generator (5) to the load resistance arrangement when the battery (6) is completely charged.

**4.** Control unit (14) according to at least one of the preceding claims, **characterized in that** the transmission ratio of the transmission which is output at the signal output when the battery (6) is partially discharged is less than or equal to the transmission ratio of the transmission which is output at the signal output when the battery (6) is completely charged.

**5.** Control unit (14) according to Claim 4, **characterized in that** the transmission (8) has a plurality of fixed transmission stages, the switching over between the transmission stages taking place in each case at predefined switching values ($n_{54}$, $n_{43}$, $n_{32}$, $n_{21}$) of the speed of the vehicle or of the rotational speed ($n_{ACT}$), the switching values when the battery (6) is partially discharged being less than the corresponding switching values when the battery (6) is completely charged.

**6.** Control unit (14) according to one of the preceding claims, **characterized in that** a clutch (4) is arranged in the drive train between the generator (5) and the engine (1).

7. Control unit (14) according to at least one of the preceding claims, **characterized in that** the generator (5) is connected at the output end to a highly dynamic electrical energy store (33).

8. Control unit (14) according to Claim 7, **characterized in that** the highly dynamic energy store (33) is a supercap.

9. Method for operating a control unit (14) according to one of the preceding claims, having the following steps:

   - the charge status of the battery (6) is determined
   - switching points ($n_{54}$, $n_{43}$, $n_{32}$, $n_{21}$) of the transmission (8) are determined as a function of the charge status of the battery (6), each switching point corresponding to a rotational speed of the engine (1) or to a vehicle speed,
   - the rotational speed ($n_{ACT}$) of the engine or the vehicle speed is measured,
   - the transmission (8) is shifted down when the shifting points ($n_{54}$, $n_{43}$, $n_{32}$, $n_{21}$) are reached.

10. Method according to Claim 9, **characterized in that** the generator (5) is disconnected from the battery (6) when the battery (6) is completely charged.

11. Method according to Claim 10, **characterized in that** the generator (5) is connected to a load resistance arrangement (31) if the battery (6) is completely charged.

12. Method according to at least one of Claims 9 to 11, having the following steps:

   - the braking torque ($M_v$) of the engine (1) is calculated from the rotational speed ($n_{ACT}$) of the engine (1),
   - the braking torque ($M_{ISG}$) of the generator (5) is calculated from the charge status of the battery (6) and the rotational speed ($n_{ACT}$) of the generator (5),
   - the necessary braking torque ($M_{BRAKE}$) of the service brake (12) is calculated from the predefined overall braking torque ($M_{SET}$) and the braking torques of the generator (5) and of the engine (1),
   - the service brake (12) is activated with the calculated braking torque ($M_{BRAKE}$).

13. Method according to at least one of Claims 9 to 12, **characterized in that** the engine (1) is switched off during a braking operation.

14. Method according to Claim 13, **characterized in that** during the braking operation the generator (5) is connected to a highly dynamic electrical energy store (33) and charges it.

**Revendications**

1. Unité de commande (14) servant à régler le rapport de transmission d'une boîte de vitesses (8) disposée dans une chaîne cinématique ensemble avec un moteur (1) et une génératrice électrique (5), afin de réaliser une assistance de freinage au moyen du couple de freinage du moteur (1) et du couple de freinage de la génératrice électrique (5), la génératrice électrique (6) alimentant un accumulateur (6), l'unité comprenant

   plusieurs entrées de signaux destinées à recevoir le couple de freinage souhaité ($M_{SOLL}$), ainsi que la vitesse de rotation ($n_{IST}$) du moteur (1) et/ou la vitesse du véhicule,

   une unité de comparaison (21) destinée à comparer la vitesse de rotation ($n_{IST}$) du moteur (1) et/ou la vitesse du véhicule avec des points de changement de rapport ($n_{54}$, $n_{43}$, $n_{32}$, $n_{21}$) de la boîte de vitesses (8), chaque point de changement de rapport correspondant à une vitesse de rotation du moteur (1) ou à une vitesse du véhicule, et destinée à déterminer le rapport de transmission de la boîte de vitesses (8) approprié pour obtenir le couple de freinage souhaité, ainsi que

   une sortie de signaux destinée à émettre un signal de commande (ü) qui détermine le rapport de transmission de la boîte de vitesses (8),

   **caractérisée par**

   une unité de calcul (22) destinée à déterminer les points de changement de rapport ($n_{54}$, $n_{43}$, $n_{32}$, $n_{21}$) de la boîte de vitesses (8) en fonction de l'état de charge (SOC) de l'accumulateur.

2. Unité de commande (14) selon la revendication 1,

   **caractérisée**

   **en ce que**, côté sortie, la génératrice (5) est reliée à l'accumulateur (6) par l'intermédiaire d'un élément de commutation pouvant être commandé, pour séparer la génératrice (5) de l'accumulateur (6) lorsque l'accumulateur (6) est entièrement chargé.

3. Unité de commande (14) selon la revendication 2,
**caractérisée**
**en ce que**, côté sortie, l'élément de commutation est relié, d'une part, à l'accumulateur (6) et, d'autre part, à un dispositif de résistance de charge pour commuter la génératrice (5) sur le dispositif de résistance de charge lorsque l'accumulateur (6) est entièrement chargé.

4. Unité de commande (14) selon au moins une des revendications précédentes,
**caractérisée**
**en ce que**, lorsque l'accumulateur (6) est partiellement déchargé, le rapport de transmission de la boîte de vitesses émis à la sortie de signaux est inférieur ou égal au rapport de transmission de la boîte de vitesses qui est émis à la sortie de signaux lorsque l'accumulateur (6) est entièrement chargé.

5. Unité de commande (14) selon la revendication 4,
**caractérisée**
**en ce que** la boite de vitesses (8) présente plusieurs étages de rapport fixes, le changement entre les étages de rapport s'effectuant à chaque fois à des valeurs de changement de rapport prédéterminées ($n_{54}$, $n_{43}$, $n_{32}$, $n_{21}$) de la vitesse du véhicule ou de la vitesse de rotation ($n_{ist}$) les valeurs de changement de rapport à l'état partiellement déchargé de l'accumulateur (6) étant plus petites que les valeurs de changement de rapport correspondantes à l'état entièrement chargé de l'accumulateur (6).

6. Unité de commande (14) selon une des revendications précédentes,
**caractérisée**
**en ce qu'**un embrayage (4) est disposé dans la chaîne cinématique entre la génératrice (5) et le moteur (1).

7. Unité de commande (14) selon au moins une des revendications précédentes,
**caractérisée**
**en ce que**, côté sortie, la génératrice (5) est reliée à un accumulateur d'énergie électrique à haute dynamique (33).

8. Unité de commande (14) selon la revendication 7,
**caractérisée**
**en ce que** l'accumulateur d'énergie à haute dynamique (33) est un Supercap.

9. Procédé de gestion d'une unité de commande (14) selon une des revendications précédentes, comprenant les étapes suivantes :

   - détermination de l'état de charge de l'accumulateur (6),
   - détermination de points de changement de rapport ($n_{54}$, $n_{43}$, $n_{32}$, $n_{21}$) de la boîte de vitesses (8) en fonction de l'état de charge de l'accumulateur (6), chaque point de changement de rapport correspondant à une vitesse de rotation du moteur (1) ou à une vitesse du véhicule,
   - mesure de la vitesse de rotation ($n_{IST}$) du moteur ou de la vitesse du véhicule,
   - rétrogradage de la boîte de vitesses (8) lorsque les points de changement de rapport ($n_{54}$, $n_{43}$, $n_{32}$, $n_{21}$) sont atteints.

10. Procédé selon la revendication 9,
**caractérisé en ce qu'**on sépare la génératrice (5) de l'accumulateur (6) lorsque l'accumulateur (6) est entièrement chargé.

11. Procédé selon la revendication 10,
**caractérisé**
**en ce qu'**on relie la génératrice (5) à un dispositif de résistance de charge (31) lorsque l'accumulateur (6) est entièrement chargé.

12. Procédé selon au moins une des revendication 9 à 11, comprenant les étapes suivantes:

   - calcul du couple de freinage ($M_v$) du moteur (1) à partir de la vitesse de rotation ($n_{IST}$) du moteur (1),
   - calcul du couple de freinage ($M_{ISG}$) de la génératrice (5) sur la base de l'état de charge de l'accumulateur (6) et de la vitesse de rotation ($n_{IST}$) de la génératrice (5),
- calcul du couple de freinage nécessaire ($M_{BREMS}$) du frein de service (12) sur la base du couple de freinage total prédéterminé ($M_{SOLL}$) et des couples de freinage de la génératrice (5) et du moteur (1),
- pilotage du frein de service (12) avec le couple de freinage calculé ($M_{BREMS}$).

13. Procédé selon au moins une des revendication 9 à 12,
**caractérisé**
**en ce que** le moteur (1) est éteint pendant un freinage.

14. Procédé selon la revendication 13,
**caractérisé**
**en ce que**, pendant le freinage, la génératrice (5) est reliée à un accumulateur d'énergie électrique à haute dynamique (33) et charge ce dernier.

Fig. 1

EP 1 301 366 B1

Fig. 2

EP 1 301 366 B1

Fig. 3

13

Fig. 4

```
┌─────────────────────────────┐
│     Start Bremsvorgang       │
└─────────────────────────────┘
              │
              ▼
┌─────────────────────────────┐
│      Motor abschalten        │
└─────────────────────────────┘
              │
              ▼
┌─────────────────────────────┐
│        i=i_Aktuell           │
└─────────────────────────────┘
              │
              ▼
┌─────────────────────────────┐
│       SOC-Berechnung         │◄────────────┐
└─────────────────────────────┘             │
              │                              │
              ▼                              │
┌─────────────────────────────┐             │
│   n_54, n_43, n_32, n_21     │             │
│         berechnen            │             │
└─────────────────────────────┘             │
              │                              │
              ▼                              │
┌─────────────────────────────┐             │
│        n_IST messen          │             │
└─────────────────────────────┘             │
              │                              │
              ▼                              │
         ◇ n_IST>n_i,i-1 ? ◇──── J ──────────┤
              │ N                            │
              ▼                              │
┌─────────────────────────────┐             │
│          i=i-1               │             │
└─────────────────────────────┘             │
              │                              │
              ▼                              │
┌─────────────────────────────┐             │
│       Zurückschalten         │             │
└─────────────────────────────┘             │
              │                              │
              ▼                              │
         ◇    Ende?    ◇───── N ─────────────┘
              │ J
              ▼
┌─────────────────────────────┐
│        Motor starten         │
└─────────────────────────────┘
              │
              ▼
┌─────────────────────────────┐
│            Ende              │
└─────────────────────────────┘
```

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4230101 A1
- DE 4330391 A1

- EP 0800949 A